# EUROPEAN PATENT APPLICATION

(11) **EP 1 271 437 A2**
(43) Date of publication of application: **02.01.2003**
(21) Application number: 02251996.1
(22) Date of filing: 20.03.2002
(51) Int. Cl.: G07G 5/00, G07F 7/10

(54) **Transaction system**

(30) Priority: 28.06.2001 JP 2001195856
(71) Applicant: FUJITSU LIMITED, Kawasaki-shi, Kanagawa 211-8588 (JP)
(72) Inventor: Omori, Yasuko, c/o Fujitsu Limited, Kawasaki-shi, Kanagawa 211-8588 (JP)
(74) Representative: Stebbing, Timothy Charles

(57) **Abstract**

In a case where a transaction with a customer is performed using a mobile terminal (1) that has a settlement function, the mobile terminal creates receipt data and registers the same on a server (3). Thereafter, a separate device (2), which has a print function, acquires said receipt data from the server (3) to print it in the form of a receipt, which means that it is possible to print a receipt for a transaction performed by means of a mobile terminal (1) which does not have a print function. The separate device (2) may be a POS terminal.

## Description

The present invention relates to a transaction system that performs settlement processing for a transaction with a customer, and more particularly relates to a transaction system, which, in a case where settlement processing, by means of a mobile terminal device not having a print function, is in progress, is capable of printing out a document used in the transaction, for example a sales receipt, from a separate device.

In a case in which a product is purchased at a retail shop, such as in a department store or a shopping center, and settlement is performed by means of a credit card or a debit card (otherwise referred to as a cash card or bank card), settlement processing is carried out by means of a POS (Point of Sale) terminal (hereinafter, in this specification, "POS terminal" refers to an installed transaction terminal device that has a POS function or settlement function, for example), which is installed at a pay counter. For example, when a settlement is by credit card, the POS terminal reads card information for a credit card received by a shop employee, performs a credit inquiry by communicating with the server of a credit company, and then prints a receipt. The shop employee asks the customer to sign the receipt, and, after checking the signature on the receipt against the signature on the credit card, returns the credit card to the customer and gives the product to the customer.

However, in recent years, mobile-type transaction terminal devices having a settlement function (sometimes referred to simply as mobile terminals subsequently) have been appearing on the market. Such mobile terminals having a settlement function comprise, in addition to a predetermined input unit (touch panel or keyboard) and a display unit, a card reader for reading card information from a credit card or cash card, and a communications function for communicating with the server of a credit company for the purpose of a credit inquiry in the case of a credit card. When a mobile terminal of this kind is given to a shop employee on the sales floor, the shop employee is able to perform settlement processing such as the reading of card information or a credit inquiry at the point of contact with the customer, without going to a pay counter where a POS terminal is installed.

However, in a case where a mobile terminal of this kind does not contain a printer for the printing of receipts, it is not possible to perform the print processing of receipts required for settlement processing. In a case such as this, there is a requirement to print a receipt via a separate device that has a print function, such as a POS terminal installed at a pay counter.

It is therefore desirable to provide a transaction system, which, in a case where settlement processing is performed using a mobile-type transaction terminal device that does not have a print function, is capable of printing out a document such as a receipt from a predetermined device.

According to the present invention, in a case where a transaction with a customer is performed using a mobile terminal that has a settlement function, the mobile terminal creates receipt data and registers same on a server. Thereafter, a separate device, which has a print function, acquires this receipt data from the server to print same in the form of a receipt, which means that it is possible to print a receipt for a transaction performed by means of a mobile terminal which does not have a print function.

In one embodiment, a transaction system executing transactions with a customer comprises: a mobile terminal device for executing settlement processing for a transaction; a server having receipt data that is information printed on a receipt for the transaction; and a printing device for acquiring the receipt data from the server via a communications line to print a receipt in accordance with this receipt data.

For example, in the above constitution, on the basis of the settlement processing, the mobile terminal device creates the receipt data, and transaction information (a transaction log) relating to the content of the transaction that contains information on the receipt data, and transmits the receipt data and the transaction information to the server via a communications line. Then, on the basis of a request from the printing device, the server transmits the receipt data to the printing device. More preferably, when the receipt data is printed, the server erases the receipt data on the basis of a notification from the printing device.

Reference will now be made, by way of example only, to the accompanying drawings in which:
Fig. 1 is a figure to illustrate the flow of a transaction between a shop employee and a customer, according to an embodiment of the present invention;
Fig. 2 is a figure that shows a constitutional example of a transaction system, according to the embodiment of the present invention;
Fig. 3 is a figure that shows a block constitutional example of the mobile-type transaction terminal device 1;
Fig. 4 is a figure that shows a block constitutional example of the POS terminal 2;
Fig. 5 is a first settlement processing flow chart according to the transaction system relating to the embodiment of the present invention;
Fig. 6 is a figure to illustrate processing, for the registration of a sale, in the mobile terminal 1;
Fig. 7 is a constitutional example of data for a transaction log;
Fig. 8 is a figure to show a constitutional example of receipt data;
Fig. 9 is an example of a screen displayed on the display unit 20 of the POS terminal 2;
Fig. 10 is an example of a printed receipt; and
Fig. 11 is a second settlement processing flow chart according to the transaction system relating to the embodiment of the present invention.

An embodiment of the present invention will be described hereinbelow. However, the scope of the technology of the present invention is not limited to or by this embodiment.

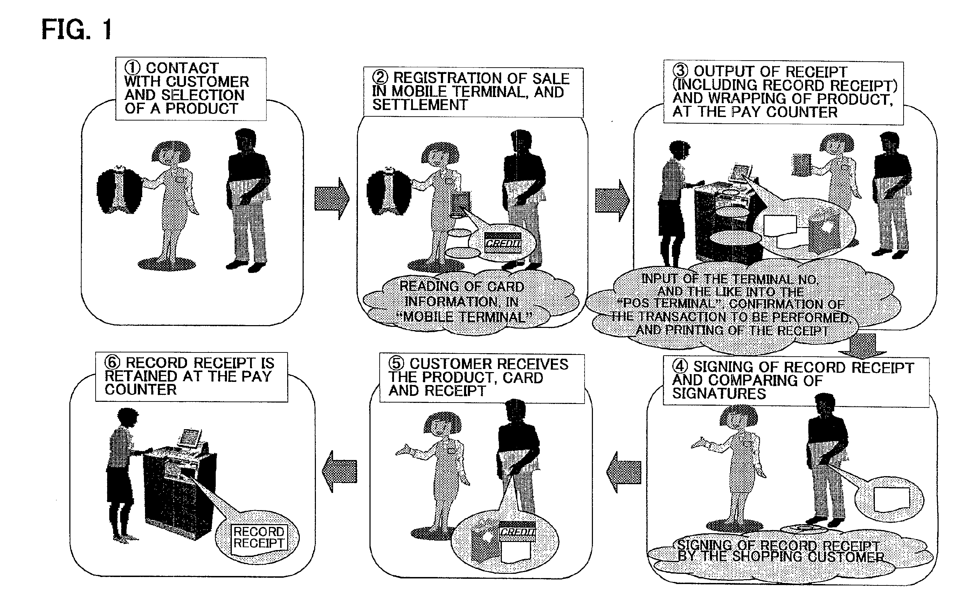

First of all, a description will be provided of the flow of a transaction between a shop employee and a customer, according to the embodiment of the present invention. Fig. 1 is a figure to illustrate such a transaction and shows an example of a transaction in a case where a settlement is performed by means of a credit card, for example. In Fig. 1, firstly:
① A shop employee makes contact with a customer on the sales floor, and the customer decides upon a product to purchase.
② The shop employee receives a credit card from the customer on the sales floor, and uses a mobile-type transaction terminal device (mobile terminal) not equipped with a print function to read card information for the credit card.
③ The shop employee guides the customer from the sales floor to the pay counter and prints out a receipt (which is composed of two sheets, for example, of which one sheet is a receipt given to the customer and the other is a record receipt retained by the shop) from a transaction terminal device installed at the pay counter (a POS terminal having a print function).
④ The shop employee asks the customer to sign the record receipt, and then compares the signature on the record receipt against the signature on the credit card.
⑤ The shop employee gives the product, the credit card and the receipt to the customer.
⑥ The shop retains the record receipt.

In this manner, according to the present embodiment, a receipt for a transaction performed by means of a mobile terminal is printed out from a separate transaction terminal device. Next, a detailed description will be provided with regard to a transaction system according to the present embodiment.

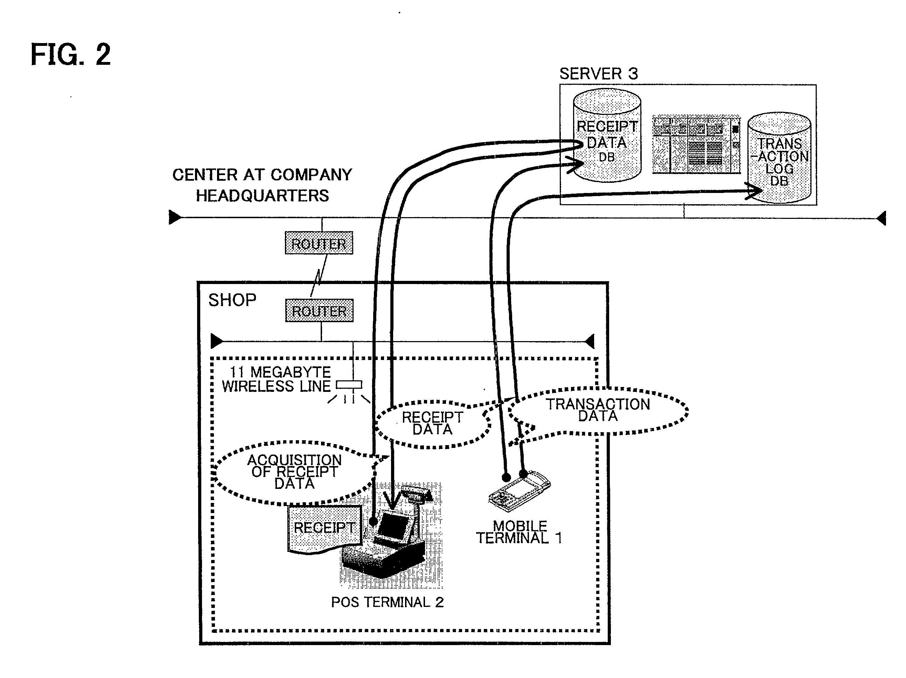

Fig. 2 is a figure that shows a constitutional example of a transaction system, according to the embodiment of the present invention. In Fig. 2, the transaction system comprises a mobile-type transaction terminal device having a settlement function ( hereinafter sometimes referred to as a mobile terminal) 1, a POS terminal installed at a predetermined pay counter in a shop (an installed transaction terminal device having a POS function, settlement function, and the like) 2, and a server 3 to be connected with the mobile terminal 1 and the POS terminal 2 via a communications line. The server 3 may, for example, be installed in a center of the company headquarters separately from the shop, and stores transaction logs transmitted from the mobile terminal 1 or the POS terminal 2 and receipt data pertaining to the present embodiment (described hereinbelow).

Furthermore, according to the present embodiment, the POS terminal 2 is a transaction terminal that constitutes a POS (Point of Sale) system for performing the collection of sales data for each product, and the cumulative storage and analysis thereof. However, a transaction terminal having a POS function signifies one kind of mobile terminal or POS terminal. However, according to the present embodiment, a POS terminal signifies an installed transaction terminal having a print function, such as a cash register, and a mobile terminal signifies a transaction terminal that can be carried by a shop employee and that does not have a print function.

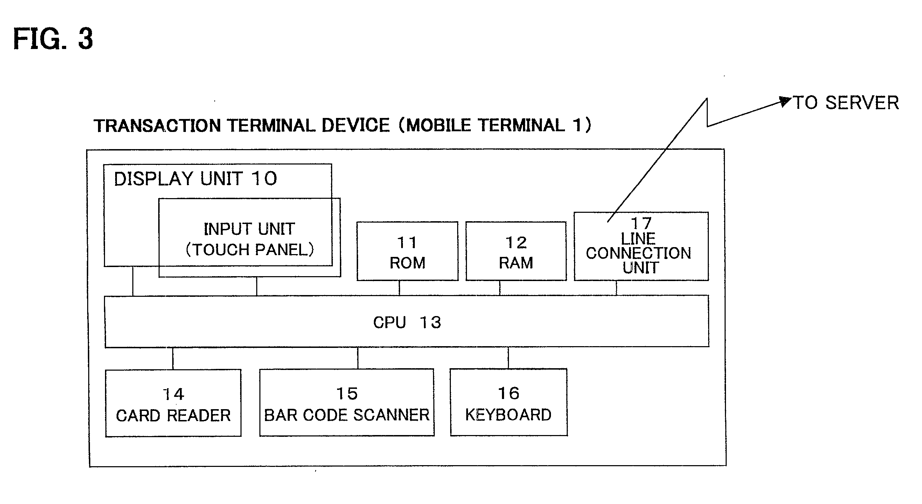

Fig. 3 is a figure that shows a block constitutional example of the mobile-type transaction terminal device 1. In Fig. 3, the mobile terminal 1 comprises: a display unit 10 such as a liquid crystal display; a ROM 11, which stores, for example, a variety of transaction programs for executing a variety of transactions such as a settlement; a RAM 12, which stores temporary data; a CPU 13, which executes the transaction programs; a card reader 14, which reads personal information for a customer (card information), which is stored on a transaction medium such as a credit card or a cash card (bank card); a bar code scanner 15, which reads a bar code on a product; a keyboard 16; and a line connection unit 17, which performs communications with the server 3 via a communications line. The mobile terminal 1 does not provide a print function.

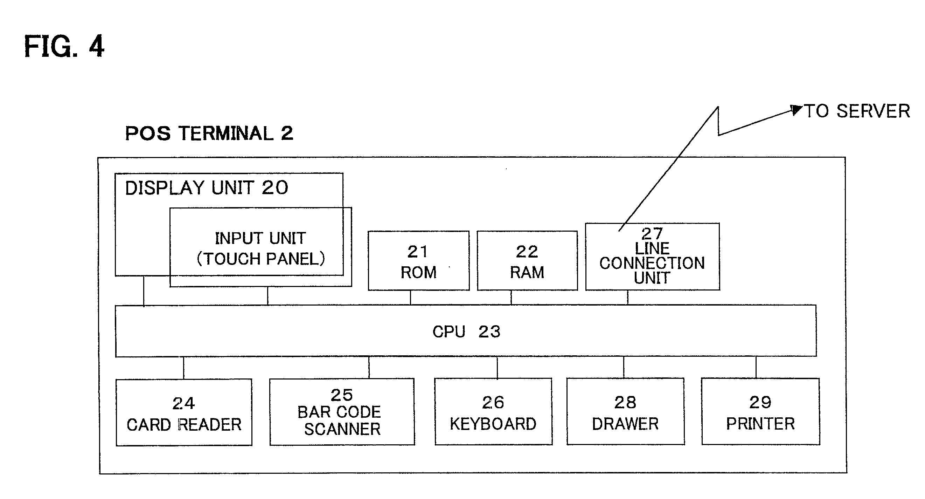

Fig. 4 is a figure that shows a block constitutional example of the POS terminal 2. In Fig. 4, the POS terminal 2 also has a constitution like that of the mobile terminal 1, and comprises: a display unit 20 such as a liquid crystal display; a ROM 21, which stores, for example, a variety of transaction programs for executing a variety of transactions such as a settlement; a RAM 22, which stores temporary data; a CPU 23, which executes the transaction programs; a card reader 24, which reads personal information for a customer (card information), which is stored on a transaction medium such as a credit card or a cash card; a bar code scanner 25, which reads a bar code on a product; a keyboard 26; and a line connection unit 27, which performs communications with the server 3 via a communications line. The POS terminal 2 further comprises a drawer 28, which is for storing cash and from which cash is taken, and a printer 29 for printing out receipts, for example, neither of which is included in the mobile terminal 1. In addition, it is preferable that the display unit 20 should comprise an input unit such as a touch panel, for example, so that it is possible to perform a variety of inputs by touching the display unit 20. The keyboard 26 may also, for example, be displayed by the display unit 20.

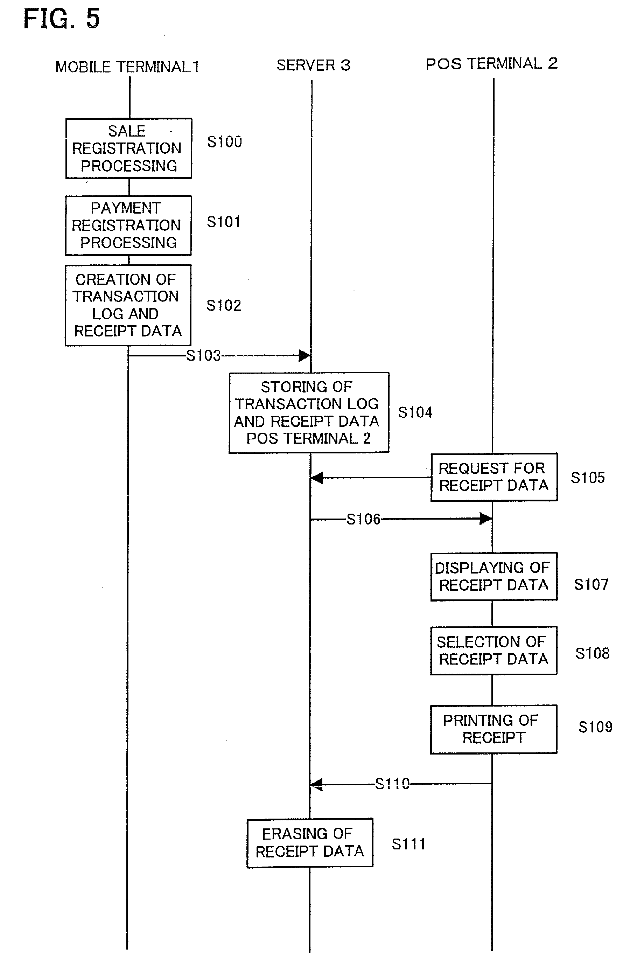

Fig. 5 is a first settlement processing flow chart according to the transaction system relating to the present embodiment. When a customer decides to purchase a product, the shop employee registers the sale in the mobile terminal 1 (S100).

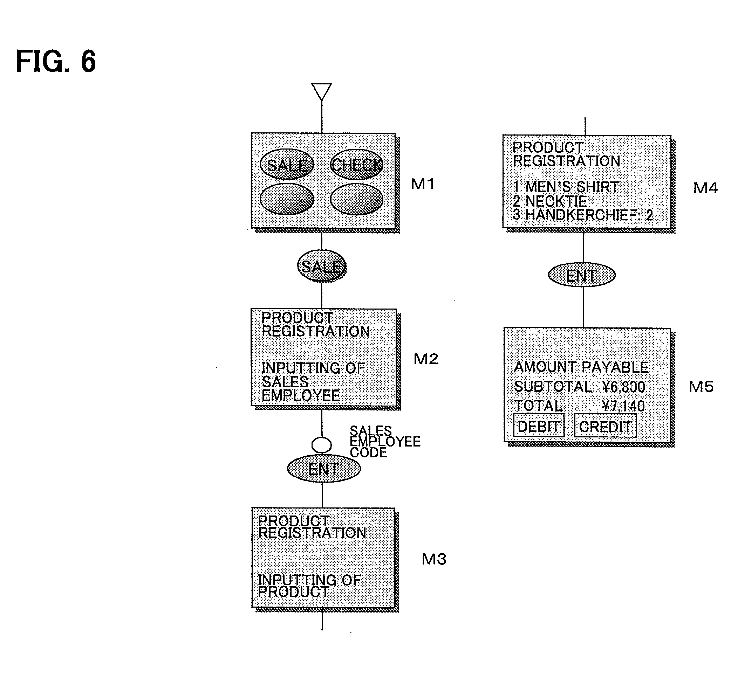

Fig. 6 is a figure to illustrate processing, for the registration of a sale, in the mobile terminal 1. In Fig. 6, screens of the display unit 10 of the mobile terminal 1 are shown by way of example, these screens being displayed in accordance with the progress of the processing. The display unit 10 comprises a touch panel, for example, and, when the shop employee touches predetermined parts of the display unit 10, the processing progresses sequentially.

In Fig. 6, a menu screen M1, which is an initial screen, is displayed by the display unit 10. When the shop employee selects "Sale", a screen M2 requiring the input of a sales employee code is displayed. The shop employee inputs his or her own sales employee code by means of the keyboard, or inputs the sales employee code by reading a bar code, which is printed on a badge, by means of a bar code scanner, for example, and then depresses an "ENT" key to confirm the sales employee code.

Thereafter, a product input screen M3 is displayed. The shop employee uses a bar code scanner to read a product bar code printed on the price tag attached to the product which the customer is going to purchase. Upon acquiring the product bar code, the mobile terminal 1 uses the POS function thereof to access a product server via a communications line in order to acquire information on the product such as the product name and price that correspond to this product bar code, and then displays the product registration screen M4. The inputting of products is not limited to the reading of a product bar code, but instead may be performed by inputting a bar code number using the keyboard, and may also be performed by means of a selection operation from product groups which have been pre-registered in the mobile terminal 1. When product inputting is complete, upon depressing the "ENT" key to determine the amount payable, the settlement amount screen M5 is displayed and the sale registration processing is thereby completed.

Returning now to Fig. 5, upon completion of sale registration, the shop employee then performs payment registration processing (S101). Using the settlement amount screen M5, the shop employee selects either a settlement by credit card or a debit card settlement by means of a cash card, in accordance with the settlement method selected by the customer.

When a credit card settlement is selected, the shop employee receives a credit card from the customer and then reads card information stored on the credit card (the credit card number or the like) by means of a card reader. When the card information is read normally, confirmation that reading has been completed normally is displayed (not shown in the figure), and when the shop employee depresses the "ENT" key, the mobile terminal 1 automatically forms a communications connection with the server of a credit company to thereby perform credit check processing. Upon receiving settlement authorization information from the server of the credit company, the mobile terminal 1 displays the settlement authorization confirmation (not shown in the figure), and the shop employee depresses the "ENT" key, following confirmation of this display, to thus complete payment registration.

On the other hand, when a debit card settlement is selected, the shop employee receives a cash card from the customer and then reads card information stored on the cash card (the bank account number or the like) by means of a card reader. When the card information is read normally, confirmation that reading has been completed normally is displayed (not shown in the figure), and, by depressing the "ENT" key, the password information input screen (not shown in the figure) is then displayed. The shop employee gives the mobile terminal to the customer and the password information is then inputted by the customer using the keyboard. Once the password information has been inputted, when the shop employee depresses the "ENT" key, the mobile terminal 1 automatically forms a communications connection with the server of a financial institution to thereby perform settlement confirmation processing. Upon receiving settlement authorization information from the server of the financial institution, the mobile terminal 1 displays the settlement authorization confirmation (not shown in the figure), and the shop employee depresses the "ENT" key, following confirmation of this display, to thus complete payment registration.

Returning now to Fig. 5, when payment registration processing is complete, the mobile terminal 1 creates a transaction log and receipt data (S102). The transaction log is so-called data relating to a transaction with a customer and contains a vast amount of information in connection with a single transaction.

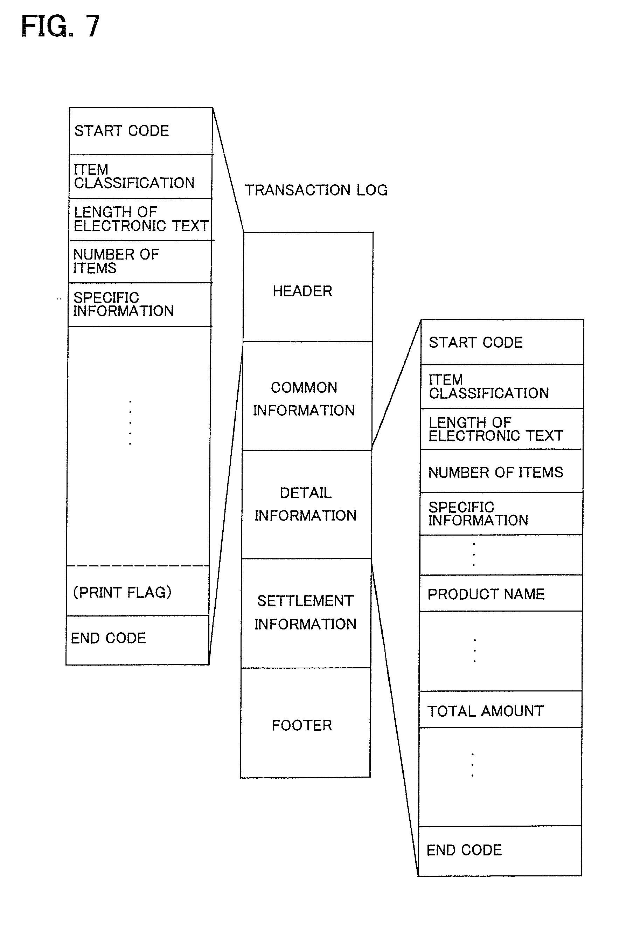

Fig. 7 is a constitutional example of data for a transaction log. In Fig. 7, the transaction log is constituted by electronic text items such as a header, common information, detail information, settlement information and a footer, for example. Each of the electronic text items begins, for example, with a start code, and contains an item classification, the length of the electronic text, and the number of information items, and contains specific information pertaining to each item, and, last of all, is ended by an end code. Further, in Fig. 7, one constitutional example of a header and of detail information is shown.

The header is a part to show the start of the transaction log, and information items may include information such as the identification number of the transaction terminal, the transaction number, the company code, the shop code, the transaction date, or the like, (which may be a mobile terminal, or a POS terminal), for example.

The common information overlaps with the header information, but, in addition to the identification number of the transaction terminal, the transaction number, and the shop code, and the like, common information includes the shop section code, the sub-section code, the transaction classification, the transaction processing time, the transaction start time, the transaction completion time, and the sales employee code, for example.

The detail information includes the product classification, the product name, the number of units, the unit price, the total (unit price × number of units), the cost price, the discount classification, the form of supply, the supplier code, the shop section code, the sub-section code, the bar code number (PLU code), and the like, for each product purchased.

The settlement information includes the settlement classification (whether by credit card or debit card), the card classification (the type of credit card, or the name of the financial institution), the card information (the card number or bank account number), the password information inputted (in the case of a cash card), the expiry date of the card (in the case of a credit card), the settled amount, the amount of tax, the authorization number from the credit company or the financial institution, the payment classification (one lump payment made the month following, payment by installments, and the like), and the amount each time when payment is by installments.

The footer is a part that shows the end of the transaction log, and contains a variety of information apart from that mentioned above in relation to a transaction.

On the other hand, the receipt data pertaining to the present embodiment is data generated by the extraction of information to be printed on a receipt from information contained in a transaction log.

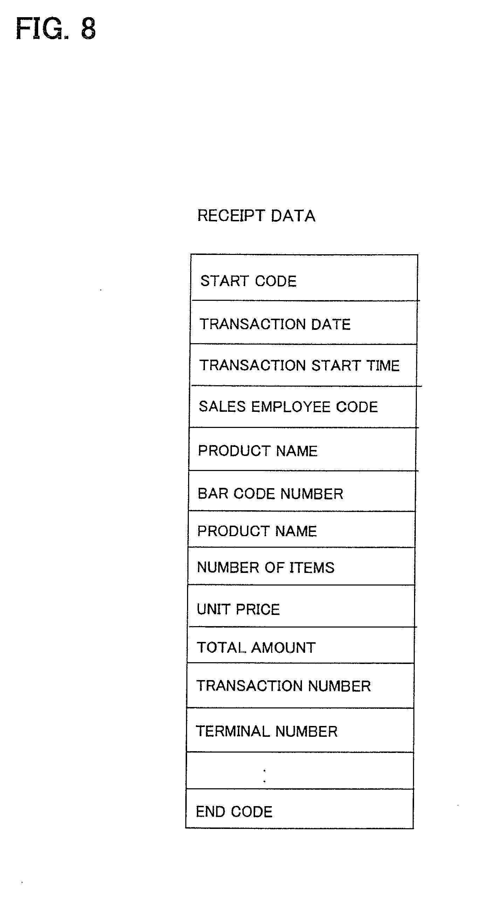

Fig. 8 is a figure to show an example format of receipt data. In Fig. 8, the receipt data begins with a start code, and contains the transaction date, the transaction start time, the sales employee code, the product name, the bar code number, the number of units, the unit price, the total amount, the transaction number, and the terminal number, and ends with an end code. Therefore, in comparison with a transaction log, receipt data is constituted by an extremely small amount of data.

Further, upon completion of payment registration processing, when the mobile terminal 1 creates a transaction log, the mobile terminal 1 extracts the above-mentioned information required for the printing of a receipt from the information contained in the transaction log, to thereby create receipt data, and transmits the transaction log and the receipt data to the server 3 (S103 in Fig. 5). Upon receiving the transaction log and the receipt data, the server 3 stores same in a transaction log DB (database) and a receipt data DB (S104 in Fig. 5) respectively.

Furthermore, when a shop employee uses the mobile terminal 1 to accomplish payment registration processing, the shop employee moves, accompanied by the customer, to a pay counter where a POS terminal 2 having a print function is installed (see Fig. 1 ③). The shop employee then operates the POS terminal 2 installed at the pay counter to access the server 3.

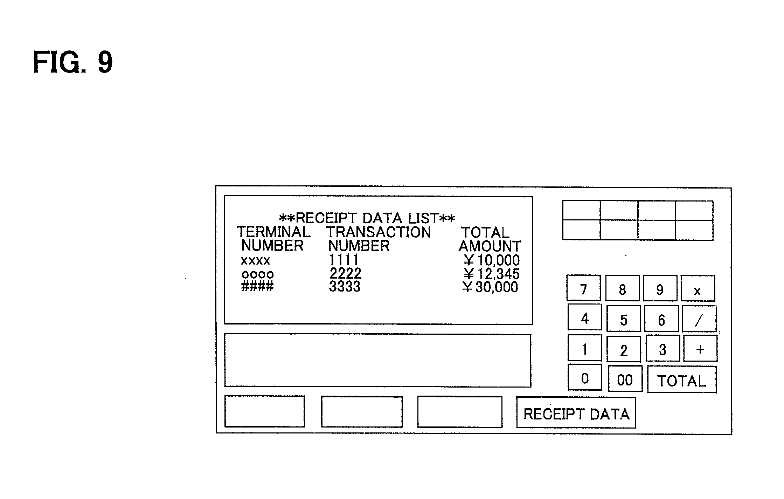

Fig. 9 is an example of a screen displayed on the display unit 20 of the POS terminal 2. In Fig. 9, the shop employee selects a "Receipt Data" button, for example. In a case where the display unit 20 is a touch panel, the shop employee touches the part of the screen constituting the "Receipt Data" button. Thereupon, the POS terminal 2 accesses the server 3 to request the receipt data (step S105 in Fig. 5). The server 3 reads all the receipt data stored in the receipt data DB and then transmits this data to the POS terminal 2 that generated the request (step S106) in Fig. 5). There are cases where receipt data from a plurality of mobile terminals is respectively recorded in the receipt data DB.

Upon receiving the receipt data, the POS terminal 2 displays this receipt data in the form of a list (step S107 in Fig. 5). In the example of a screen shown in Fig. 9, a receipt data list is displayed, but the terminal number, the transaction number, and the total amount, in each item of receipt data, are displayed. The shop employee is thus able to specify the transaction which is being dealt with at present from this information.

The display unit 20 of the POS terminal has, for example, an input unit such as a touch panel, and the shop employee touches the part of the screen displaying the receipt data for the transaction he or she is handling to select one item of data (step S108 in Fig. 5).

The POS terminal 2 prints a receipt in accordance with the receipt data thus selected (step S109 in Fig. 5).

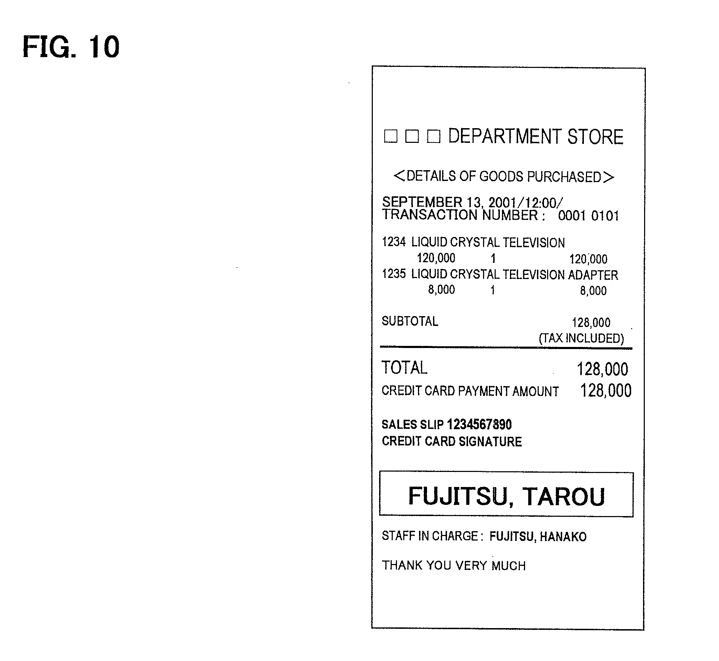

Fig. 10 is an example of a printed receipt. Information that is included in the receipt data mentioned above is printed on the receipt shown in Fig. 10. In a case of a settlement by credit card, a space for a signature is printed on the receipt. The shop employee asks the customer to sign the receipt, and, after comparing the signature on the credit card thus received against the signature on the receipt, gives the credit card, the receipt and the product to the customer. The transaction with the customer is thus complete.

Furthermore, the POS terminal 2 prints a receipt, and sends back identification information for the receipt data thus selected (the terminal number and the transaction number, for example) to the server 3 (step S110 in Fig. 5), and the server 3 erases receipt data that corresponds to this identification information from the receipt data DB (step S111 in Fig. 5). This is because receipt data thus printed as a receipt is then not required.

Therefore, according to the present embodiment, in a case where a mobile terminal is used to perform a transaction with a customer, the mobile terminal creates receipt data and registers it on a server. Then, a POS terminal having a print function acquires this receipt data to print it in the form of a receipt, which means that it is possible to print a receipt for a transaction performed by means of a terminal device which does not have a print function. Since receipt data is stored on a server, in a case in which a plurality of POS terminals access the server, it is possible to print receipts from any of the POS terminals. Moreover, since receipt data is created by plural mobile terminals, the server searches for a transaction log required for the printing of a receipt from among a multiplicity of transaction logs that each contain various data, and, in addition, since the server is therefore not burdened with the task of creating receipt data, the load on the server can thus be diminished.

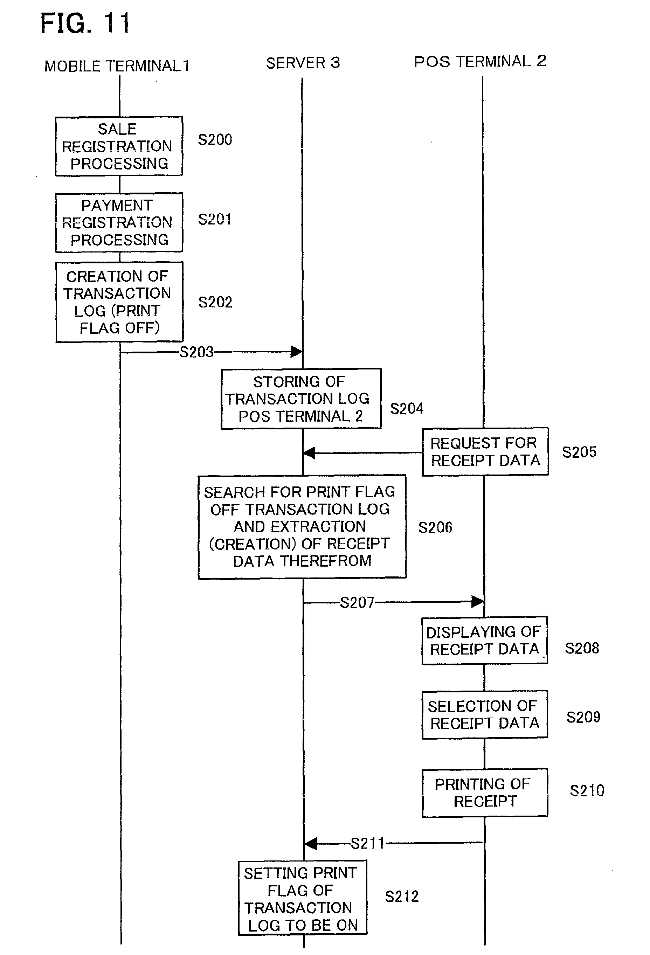

Fig. 11 is a second settlement processing flow chart according to the transaction system relating to the embodiment of the present invention. According to the second settlement processing, the mobile terminal 1 does not transmit receipt data to the server 3, but instead, in accordance with a request from a POS terminal at the pay counter, the server 3 creates receipt data from a transaction log. For this reason, a transaction log newly contains print information (a print flag), and, since the mobile terminal 1 does not print a receipt at the stage when it transmits a transaction log in relation to each transaction, the mobile terminal 1 transmits a print flag OFF (not printed) transaction log to the server 3. On the other hand, since the POS terminal 2 transmits a transaction log to the server 3 following the printing of a receipt, the POS terminal 2 transmits a print flag ON (printing accomplished) transaction log to the server 3. The print flag may, for example, be attached to the header of the transaction log (see Fig. 7).

In Fig. 11, since sale registration processing (S200) and payment registration processing (S201) are the same as those described above, a description thereof will be omitted here. Following completion of payment registration processing, the mobile terminal 1 creates a transaction log as described above (S202). At this time, a print flag contained in a transaction log created by a mobile terminal 1 is in an OFF state. The mobile terminal 1 transmits a transaction log to the server 3, and the server 3 then stores this transaction log on the transaction log DB.

In the same way as described before, when a shop employee uses the mobile terminal 1 to accomplish payment registration processing, the shop employee moves, accompanied by the customer, to a pay counter where a POS terminal 2 having a print function is installed (See Fig. 1③). The shop employee then operates the POS terminal 2 installed at the pay counter (touches the "Receipt Data" button on the screen) to request receipt data from the server 3 (S205).

Upon receiving a receipt data request, the server 3 searches for a print flag OFF transaction log from within the transaction log DB. The server 3 then extracts the information required for a receipt from among the print flag OFF transaction logs to thereby create receipt data (S206). The constitution of the receipt data thus created is the same as that shown in Fig. 8. The server 3 transmits receipt data thus created to the POS terminal 2 (S207).

The POS terminal 2 displays the receipt data received on the display unit 20 (S208). In this case also, when there is a plurality of receipt data, in order that one item of receipt data can be selected therefrom, the terminal number, the transaction number, and the total amount are displayed in this receipt data. When the shop employee touches the part of the screen displaying the receipt data for the transaction which he or she is taking charge of to select one item of receipt data (S209), the POS terminal 2 prints a receipt in accordance with the receipt data thus selected (S210).

Following printing of the receipt, the POS terminal 2 sends back the receipt data thus selected, that is, identification information for the transaction log (for example, the terminal number and the transaction number) to the server 3 (S211), and the server 3 then sets the print flag of the transaction log corresponding to this identification information to an ON state (printing accomplished) (S212).

Furthermore, in the embodiment described above, upon receiving a print flag OFF transaction log, the server 3 may also automatically create receipt data and store same in the receipt data DB. At this time, when the server 3 creates receipt data from a print flag OFF transaction log, the print flag is set to an ON state. Then, the POS terminal 2 acquires receipt data from the receipt data DB, and, following the printing of a receipt, erases this receipt data from the receipt data DB.

Therefore, the server may also create the receipt data, but, in such a case, a print flag, which identifies whether or not receipt printing is accomplished, is contained in a transaction log, and the server judges whether or not receipt data is to be created in accordance with the state of this print flag. By setting the print flag in a transaction log, a search on the server for a transaction log required for receipt printing becomes straightforward, and the processing load on the server may thus be diminished.

In the transaction system according to the present embodiment, the device for the printing of receipts need not be a POS terminal 2, but may equally be a terminal device that has a print function and a communications function for communicating with the server 3 (for example, a personal computer that is connected with a printer).

In addition, the server 3 may be installed in a shop or may be installed in a location outside the shop such as in a center at the company headquarters. Further, a server to store receipt data and a server to store transaction logs may be separate from one another.

Moreover, in the embodiment described hereinabove, a description has been provided in relation to settlement by credit card. However, the present invention may be applied equally to a debit card settlement using a cash card (bank card).

Also, the transaction medium for the storage of card information that is personal information for a customer (a card number) is not limited to a credit card or a cash card, but may also be a transaction medium of a different form, for example (an IC memory or the like not shaped as a card, for instance).

Moreover, in the embodiment described hereinabove, a description has been provided in relation to the printing of receipts, but the present invention is not limited to receipts, being applicable also to the printing of other documents such as sales slips or vouchers.

According to the present invention hereinabove, in a case where a transaction with a customer is performed using a mobile terminal that has a settlement function, the mobile terminal creates data pertaining to the transaction and registers same on a server. Thereafter, a separate device, which has a print function, acquires this data from the server to print same in the form of a receipt or other document related to the transaction, which means that it is possible to print a document for a transaction performed by means of a mobile terminal which does not have a print function.

In the above, reference is made to communications lines between the server and the printing device, and between the server and the mobile terminal. Of course, any kind of wireless or fixed communications network may be employed to provide these communication lines, and different networks may be used in each case.

## Claims

1. A transaction system executing a transaction with a customer, comprising:
a mobile terminal device for executing settlement processing for a transaction;
a server having receipt data that is information printed on a receipt for said transaction; and
a printing device for acquiring said receipt data from said server via a communications line to print a receipt in accordance with said receipt data.

2. The transaction system according to claim 1, wherein said mobile terminal device acquires information for settlement which is stored on a transaction medium, and, on the basis of the information thus acquired, executes settlement processing for said transaction.

3. The transaction system according to claim 1 or 2,wherein on the basis of said settlement processing, said mobile terminal device creates said receipt data, and transaction information relating to the content of said transaction that contains information on said receipt data, and transmits said receipt data and said transaction information to said server via a communications line, and wherein, on the basis of a request from said printing device, said server transmits said receipt data to said printing device.

4. The transaction system according to claim 3, wherein, when said receipt data is printed, said server erases said receipt data on the basis of a notification from said printing device.

5. The transaction system according to claim 1 or 2,
wherein, on the basis of said settlement processing, said mobile terminal device creates transaction information relating to the content of said transaction that contains receipt non-print information and information on said receipt data, and transmits the transaction information to said server, and
wherein, on the basis of a request from said printing device, said server extracts transaction information that contains said receipt non-print information from at least one item of transaction information to create said receipt data from the transaction information thus extracted, and then transmits said receipt data to said printing device.

6. The transaction system according to claim 5, wherein, when said receipt data is printed, said server rewrites, on the basis of a notification from said printing device, the receipt non-print information contained in said transaction information as receipt printing accomplished information.

7. The transaction system according to claim 1 or 2,
wherein, on the basis of said settlement processing, said mobile terminal device creates transaction information relating to the content of said transaction that contains receipt non-print information and information on said receipt data, and transmits the transaction information to said server, and
wherein, upon receiving said transaction information, said server creates said receipt data from the transaction information on the basis of said receipt non-print information, and then transmits, in accordance with a request from said printing device, said receipt data to said printing device.

8. The transaction system according to claim 7, wherein, when said receipt data is created, said server rewrites receipt non-print information contained in said transaction information as receipt printing accomplished information.

9. The transaction system according to claim 8, wherein, on the basis of a notification from said printing device, said server erases said receipt data.

10. A mobile terminal device for executing a transaction with a customer, comprising:
a control unit for executing settlement processing for a transaction, and, in accordance with said settlement processing, for creating receipt data that is information printed on a receipt for said transaction; and
a communications unit for transmitting said receipt data to a predetermined server via a communications line.

11. The mobile terminal device according to claim 10,
wherein said control unit creates transaction information relating to the content of said transaction that contains information on said receipt data, and
wherein said communications unit transmits, in addition to said receipt data, said transaction information to said server.

12. A printing device, which prints a receipt for a transaction for which settlement processing has been performed by means of a mobile terminal device that executes a transaction with a customer, comprising:
a communications unit for acquiring at least one item of receipt data that is information printed on a receipt for said transaction, from a predetermined server via a communications line; and
a printing unit for printing a receipt in accordance with one item of receipt data from said receipt data thus acquired.

13. The printing device according to claim 12, further comprising:
a display unit for displaying, when said receipt data is acquired, at least partial information contained in said receipt data; and
an input unit for selecting said receipt data displayed by said display unit.

14. The printing device according to claim 13, wherein said partial information includes identification information for said mobile terminal device, identification information for said transaction, and the total amount which is settled in the course of said transaction.

15. The printing device according to claim 12,13, or 14,wherein said printing device is a POS (Point of Sale) terminal.

16. A server, which connects, via a communications line, with a mobile terminal device that executes a transaction with a customer, and with a printing device that prints a receipt for a transaction for which settlement processing has been performed by means of said mobile terminal device, comprising:
a storing unit for storing receipt data that is information printed on a receipt for said transaction; and
a communications unit for transmitting said receipt data to said printing device.

17. The server according to claim 16, wherein said communications unit receives said receipt data from said mobile terminal device.

18. A transaction method for executing a transaction with a customer by means of a transaction system that comprises a server, and a first terminal device and a second terminal device that connect to the server via a communications line, comprising the steps of:
said first terminal device executing settlement processing for said transaction and then transmitting receipt data that is information printed on a receipt for said transaction to said server; and
said second terminal device accessing said server to acquire said receipt data, and then printing a receipt in accordance with said receipt data.

19. The transaction method according to claim 18, wherein, when said receipt data is printed, said server erases said receipt data on the basis of a notification from said printing device.

20. A transaction method for executing a transaction with a customer by means of a transaction system that comprises a server, and a first terminal device and a second terminal device that connect to the server via a communications line, comprising the steps of:
said first terminal device executing settlement processing for said transaction and then transmitting transaction information relating to the content of said transaction to said server;
said server creating receipt data that is information printed on a receipt for said transaction on the basis of said transaction information; and
said second terminal device accessing said server to acquire said receipt data, and then printing a receipt in accordance with said receipt data.

21. The transaction method according to claim 20, wherein said server creates said receipt data in accordance with reception of said transaction information from said first terminal device, or in accordance with access from said second terminal device.
